# EUROPEAN PATENT SPECIFICATION

(11) **EP 3 951 962 B1**
(45) Date of publication and mention of the grant of the patent: **10.09.2025**
(21) Application number: 20784642.9
(22) Date of filing: 16.03.2020
(51) Int. Cl.: H01M 6/18, H01M 4/13, H01M 4/62, H01M 10/052, H01M 10/0562, H01B 1/06, H01B 1/10

(54) **SOLID ELECTROLYTE**
FESTELEKTROLYT
ÉLECTROLYTE SOLIDE

(30) Priority: 29.03.2019 JP 2019068987
(43) Date of publication of application: 09.02.2022
(73) Proprietor: Mitsui Mining & Smelting Co., Ltd., Shinagawa-ku Tokyo 141-8584 (JP)
(72) Inventor: KANAMORI, Tomohiro, Ageo-shi, Saitama 362-0021 (JP)
(74) Representative: Novagraaf Technologies
(86) International application number: PCT/JP2020/011461
(87) International publication number: WO 2020/203224

(56) References cited:
- EP-A1- 3 557 680
- WO-A1-2018/110647
- WO-A1-2018/110647
- JP-A- 2017 188 352
- US-A1- 2015 349 377
- US-A1- 2017 155 170

## Description

### Technical Field

The present invention relates to a sulfide solid electrolyte favorably used in a solid-state battery.

### Background Art

Recently, instead of electrolytic solutions used in many liquid-based batteries, solid electrolytes have garnered attention. It is hoped that solid-state batteries in which such solid electrolytes are used will be put to practical use as batteries that are safer than liquid-based batteries in which flammable organic solvents are used and that also have a high energy density.

A known example of conventional technologies relating to solid electrolytes is disclosed in Patent Literature 1. Patent Literature 1 discloses a method for producing a sulfide solid electrolyte, the method including performing mechanical milling on lithium sulfide and another sulfide in a state in which a hydrocarbon-based organic solvent is added thereto. In Patent Literature 1, there is a description to the effect that a sulfide solid electrolyte that exhibits a high level of lithium ionic conductivity even at room temperature can be obtained with this production method.

WO 2018/110647 A1 describes further methods for the production of sulfide solid electrolytes.

### Citation List

### Patent Literature

Patent Literature 1: JP 2009-110920A

### Summary of Invention

Incidentally, when a sulfide solid electrolyte is produced using a wet method, formation of hydrogen sulfide tends to be more likely to occur due to a solvent remaining in the sulfide solid electrolyte. For this reason, from the viewpoint of reducing the amount of hydrogen sulfide to be produced, it is desirable to minimize the amount of solvent remaining in the sulfide solid electrolyte. However, minimizing the amount of solvent remaining in the sulfide solid electrolyte prolongs the drying time of the sulfide solid electrolyte. Moreover, especially in mass production of a sulfide solid electrolyte, since the amount of sulfide solid electrolyte to be produced increases, it is difficult to completely dry the sulfide solid electrolyte.

Therefore, an object of the present invention is to provide a sulfide solid electrolyte that can reduce the formation of hydrogen sulfide while eliminating the above-described problems.

The inventor of the present invention has conducted studies on the amount of organic solvent remaining in a sulfide solid electrolyte, and newly found that the amount of hydrogen sulfide produced can be effectively reduced if the amount of organic solvent is within a very limited predetermined range. The present invention was made based on such findings, and provides a sulfide solid electrolyte having ionic conductivity and containing an organic solvent,
wherein the organic solvent is contained in an amount of 0.95 mass% or less.

Also, the present invention provides an electrode mixture that includes the above-described sulfide solid electrolyte and a positive electrode active material or a negative electrode active material. Furthermore, the present invention provides a solid-state battery that includes the above-described sulfide solid electrolyte or the above-described electrode mixture.

### Brief Description of Drawings

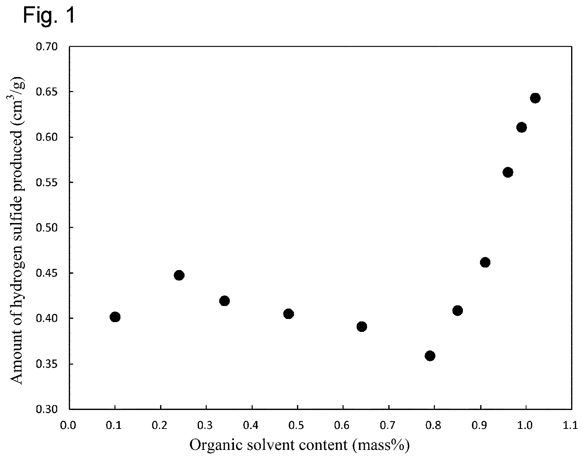

[Fig. 1] Fig. 1 is a graph showing the relationship between the amount of organic solvent contained in each of sulfide solid electrolytes obtained in examples and comparative examples and the amount of hydrogen sulfide produced.

### Description of Embodiments

Hereinafter, the present invention will be described on the basis of preferred embodiments thereof. The present invention relates to a sulfide solid electrolyte. The sulfide solid electrolyte of the present invention has lithium ionic conductivity in a solid state. The sulfide solid electrolyte of the present invention has, preferably at room temperature, i.e., 25°C, a lithium ionic conductivity of preferably 2.0 mS/cm or more, more preferably 4.2 mS/cm or more, even more preferably 5.0 mS/cm or more, yet even more preferably 5.5 mS/cm or more, and yet even more preferably 6.0 mS/cm or more. The lithium ionic conductivity can be measured using a method specified in Examples, which will be described later.

An example of the sulfide solid electrolyte is a solid electrolyte containing elemental lithium (Li), elemental phosphorus (P), and elemental sulfur (S). In particular, from the viewpoint of improving the lithium ionic conductivity, it is preferable to use a solid electrolyte containing elemental lithium (Li), elemental phosphorus (P), elemental sulfur (S), and an elemental halogen. The sulfide solid electrolyte may also contain another element in addition to elemental lithium (Li), elemental phosphorus (P), elemental sulfur (S), and the elemental halogen. For example, a portion of elemental lithium (Li) may be replaced with another elemental alkali metal, a portion of elemental phosphorus (P) may be replaced with another elemental pnictogen, and a portion of elemental sulfur may be replaced with another elemental chalcogen.

The sulfide solid electrolyte of the present invention contains an organic solvent in a predetermined amount. As described above, minimizing the amount of solvent remaining in the sulfide solid electrolyte was considered to be advantageous in conventional technologies, from the viewpoint of reducing the amount of hydrogen sulfide to be produced. However, as a result of studies conducted by the inventor of the present invention, it was newly found that the presence of an amount of the solvent within a certain range in the sulfide solid electrolyte is rather effective in reducing the formation of hydrogen sulfide. In other words, an allowable range for the amount of solvent contained in the sulfide solid electrolyte was newly found.

More specifically, the sulfide solid electrolyte of the present invention contains an organic solvent in an amount of preferably 0.95 mass% or less. If the amount of organic solvent is higher than this value, a large amount of hydrogen sulfide is produced. In addition, the ease of flow of the sulfide solid electrolyte, which is a powder, is reduced, and the ease of handling decreases accordingly. For example, the reduction in the ease of flow makes sieving difficult. In view of this, the amount of organic solvent contained in the sulfide solid electrolyte is more preferably 0.90 mass% or less, and even more preferably 0.85 mass% or less. On the other hand, the lower limit of the organic solvent content is preferably 0.01 mass% or more, more preferably 0.05 mass% or more, and even more preferably 0.10 mass% or more. In the case where the amount of organic solvent contained in the sulfide solid electrolyte is excessively low as well, it is not easy to reduce the formation of hydrogen sulfide. Heretofore, there was a trade-off relationship between the reduction in the formation of hydrogen sulfide from the sulfide solid electrolyte and the improvement in the lithium ionic conductivity of the sulfide solid electrolyte. However, the present invention provides the advantage of enabling a reduction in the formation of hydrogen sulfide while maintaining the lithium ionic conductivity.

In the present invention, the amount of organic solvent contained in the sulfide solid electrolyte is important in relation to the reduction in the formation of hydrogen sulfide, and the type of organic solvent does not have a significant effect on the reduction in the formation of hydrogen sulfide. In other words, regardless of the type of organic solvent, if a considerable amount of organic solvent is contained in the sulfide solid electrolyte, hydrogen sulfide is produced. However, from an industrial point of view, an organic solvent is not intentionally added to a sulfide solid electrolyte, but an organic solvent is used in the production of a sulfide solid electrolyte and, in most cases, remains after the production and is contained in the sulfide solid electrolyte as a result. In view of this, an organic solvent used in the production of a sulfide solid electrolyte may be mainly used as the organic solvent used in the present invention. Examples of such an organic solvent include: aromatic organic solvents such as toluene, xylene, benzene, and solvent naphtha; and aliphatic organic solvents such as heptane, decane, normal hexane, cyclohexane, and mineral spirits. One of these organic solvents may be used alone, or two or more thereof may be used in combination. In the case where two or more organic solvents are contained in the sulfide solid electrolyte, the "amount of organic solvent" described above means the total amount of all of those organic solvents.

In the present invention, the amount of organic solvent contained in the sulfide solid electrolyte is measured using a loss-on-ignition method. Specifically, the sulfide solid electrolyte is heated in a muffle furnace to remove the organic solvent by heating. The heating is performed at 180°C for 20 minutes. The heating atmosphere is an inert atmosphere, such as a nitrogen atmosphere or an argon atmosphere. The organic solvent content is defined as (W1-W2)/W1×100, where W1 is the mass before heating, and W2 is the mass after heating. It is suitable that the amount of sulfide solid electrolyte used is about 5 g.

In order to set the amount of organic solvent contained in the sulfide solid electrolyte to the above-described value, for example, the following method can be used: a slurry that contains particles of a sulfide solid electrolyte produced using a common method and an organic solvent is subjected to wet grinding, and then, an operation for removing the organic solvent from the slurry is performed. Examples of the operation for removing the organic solvent from the slurry include methods in which hot-air drying or vacuum drying is performed after or without solid-liquid separation through natural filtration, centrifugation, pressurized filtration, vacuum filtration, or the like. Of these operations, it is preferable to use a method in which vacuum drying is performed after solid-liquid separation through vacuum filtration, because this method can be performed with a relatively simple apparatus and can shorten the drying time. During the vacuum drying, the pressure is preferably 10,000 Pa or less, and more preferably 5,000 Pa or less, in terms of absolute pressure. There is no particular limitation on the lower limit value of the pressure. The temperature is preferably from 50°C to 200°C, and more preferably from 70°C to 160°C.

The above-described wet grinding is performed for the purpose of adjusting the sulfide solid electrolyte to a suitable particle size for use in a solid-state battery. A preferable particle size of the sulfide solid electrolyte, in terms of the cumulative volume particle size D₅₀ at a cumulative volume of 50 vol% as measured through particle size distribution analysis using a laser diffraction and scattering method, is from 0.1 to 10.0 µm, more preferably from 0.3 to 10.0 and even more preferably 0.5 to 10.0 µm. Particle size control methods are roughly divided into wet grinding and dry grinding. In the present invention, wet grinding is mainly used. The reason for this is that, with wet grinding, it is easy to obtain sulfide solid electrolyte particles having the above-described D₅₀.

From the viewpoint of making the sulfide solid electrolyte suitable for use in a solid-state battery, it is advantageous to adjust not only the particle size but also the particle size distribution. For this purpose, the cumulative volume particle size D₁₀ at a cumulative volume of 10 vol% of the sulfide solid electrolyte of the present invention as measured through particle size distribution analysis using a laser diffraction and scattering method is preferably from 0.05 to 10.0 µm, more preferably from 0.1 to 5.0 µm, and even more preferably from 0.3 to 2.0 µm. Also, the cumulative volume particle size D₉₅ at a cumulative volume of 95 vol% of the sulfide solid electrolyte of the present invention as measured through particle size distribution analysis using a laser diffraction and scattering method is preferably from 0.3 to 35.0 µm, more preferably from 0.5 to 30.0 µm, and even more preferably from 1.0 to 25.0 µm. In order to achieve D₁₀ and D₉₅ within the above-described ranges, the sulfide solid electrolyte can be subjected to wet grinding under appropriately set conditions.

From the viewpoint of improving the lithium ionic conductivity even more, the sulfide solid electrolyte is made of a material that has an argyrodite-type crystal structure. An argyrodite-type crystal structure refers to a crystal structure possessed by a group of compounds derived from a mineral represented by the chemical formula Ag₈GeS₆. From the viewpoint of improving the ionic conductivity yet even more, it is particularly preferable that the sulfide solid electrolyte having an argyrodite-type crystal structure has a crystal structure belonging to that of cubic crystals.

In the sulfide solid electrolyte having an argyrodite-type crystal structure, one or two or more elements selected from the group consisting of fluorine (F), chlorine (Cl), bromine (Br), and iodine (I), for example, can be used as a halogen contained in the sulfide solid electrolyte. From the viewpoint of improving the ionic conductivity, it is particularly preferable to use a combination of chlorine and bromine as the halogen.

From the viewpoint of improving the ionic conductivity even more, it is particularly preferable that the sulfide solid electrolyte having an argyrodite-type crystal structure is a compound represented by, for example, a compositional formula: Li_{7-a-2b}PS_{6-a-b}Xₐ, where X represents at least one of elemental fluorine (F), elemental chlorine (Cl), elemental bromine (Br), and elemental iodine (I). Elemental fluorine (F), elemental chlorine (Cl), elemental bromine (Br), and elemental iodine (I) can be used as the elemental halogen in the compositional formula above, and one of these elements may be used, or two or more of these elements may be used in combination.

In the above-described compositional formula, a represents the molar ratio of the elemental halogen (X) and is preferably from 0.4 to 2.2. If a is within this range, the cubic argyrodite-type crystal structure is stable at temperatures near room temperature (25°C), and the lithium ionic conductivity can be increased. From this point of view, a is more preferably from 0.5 to 2.0, even more preferably from 0.6 to 1.9, and yet more preferably from 0.7 to 1.8.

In the above-described compositional formula, b represents a value indicating how much smaller the amount of the Li₂S component is than that in the stoichiometric composition. It is preferable that the value of b satisfies -0.9 ≤ b ≤ -a+2, because this makes the cubic argyrodite-type crystal structure stable at temperatures near room temperature (25°C) and increases the lithium ionic conductivity. In particular, from the viewpoint of improving the moisture resistance of the cubic argyrodite-type crystal structure, it is more preferable that b satisfies -a+0.4 ≤ b, and it is even more preferable that b satisfies -a+0.9 ≤ b.

Whether or not a sulfide solid electrolyte has an argyrodite-type crystal structure can be confirmed by performing XRD measurement, for example. That is to say, in an X-ray diffraction pattern measured with an X-ray diffractometer (XRD) using CuKα1 radiation, a crystalline phase having an argyrodite-type structure has characteristic peaks at 2θ = 15.34° ± 1.00°, 17.74° ± 1.00°, 25.19° ± 1.00°, 29.62° ± 1.00°, 30.97° ± 1.00°, 44.37° ± 1.00°, 47.22° ± 1.00°, and 51.70° ± 1.00°. Furthermore, a crystalline phase having an argyrodite-type structure also has characteristic peaks at, for example, 2θ = 54.26° ± 1.00°, 58.35° ± 1.00°, 60.72° ± 1.00°, 61.50° ± 1.00°, 70.46° ± 1.00°, and 72.61° ± 1.00°. On the other hand, if a sulfide solid electrolyte does not contain a crystalline phase having an argyrodite-type structure, this can be confirmed by checking that the sulfide solid electrolyte does not have the above-described peaks characteristic of a crystalline phase having an argyrodite-type structure.

A sulfide solid electrolyte having an argyrodite-type crystal structure means that the sulfide solid electrolyte has at least a crystalline phase having an argyrodite-type structure. In the present invention, it is preferable that the sulfide solid electrolyte has a crystalline phase having an argyrodite-type structure as the main phase. In this case, the term "main phase" refers to a phase that occupies the largest proportion of the total amount of all of the crystalline phases constituting the sulfide solid electrolyte. Accordingly, the proportion of a crystalline phase having an argyrodite-type structure contained in the sulfide solid electrolyte to all of the crystalline phases constituting the sulfide solid electrolyte is, for example, preferably 60 mass% or more, or more preferably 70 mass% or more, 80 mass% or more, or 90 mass% or more. Note that the proportion of a crystalline phase can be confirmed through XRD, for example.

It is conceivable that, although a sulfide solid electrolyte having an argyrodite-type crystal structure exhibits a high level of lithium ionic conductivity, due to the presence of S²⁻ anions that are not in close proximity to elemental P in the structure, it is highly reactive with water and produces a large amount of H₂S, compared with crystalline Li₃PS₄ and 75Li₂S-P₂S₅ glass in which most of elemental S constitutes PS₄³⁻ units. Therefore, controlling the organic solvent content according to the present invention makes it possible to effectively reduce the amount of hydrogen sulfide to be produced even in a sulfide solid electrolyte having an argyrodite-type crystal structure.

The sulfide solid electrolyte of the present invention can be produced using an appropriate method in accordance with the type thereof. For example, in order to produce a sulfide solid electrolyte having an argyrodite-type crystal structure, a lithium sulfide (Li₂S) powder, a diphosphorus pentasulfide (P₂S₅) powder, and a lithium chloride (LiCl) powder and/or a lithium bromide (LiBr) powder can be mixed such that elemental lithium, elemental phosphorus, elemental sulfur, and an elemental halogen are contained in the mixture in predetermined molar ratios, and then the mixture can be fired in an inert atmosphere or in an atmosphere containing hydrogen sulfide gas. The atmosphere containing hydrogen sulfide gas may be an atmosphere of 100% hydrogen sulfide gas or may be an atmosphere of a gas mixture of hydrogen sulfide gas and an inert gas such as argon. The firing temperature is preferably from 350°C to 550°C, for example. The retention time at this temperature is preferably from 0.5 to 20 hours, for example.

The thus obtained sulfide solid electrolyte of the present invention can be used as a material that constitutes a solid electrolyte layer, or as a material that is contained in an electrode mixture containing an active material, for example. Specifically, the sulfide solid electrolyte can be used in a positive electrode mixture that contains a positive electrode active material and constitutes a positive electrode layer, or in a negative electrode mixture that contains a negative electrode active material and constitutes a negative electrode layer. Therefore, the solid electrolyte of the present invention can be used in a battery having a solid electrolyte layer, or a so-called solid-state battery. More specifically, the solid electrolyte can be used in a lithium solid-state battery. The lithium solid-state battery may be a primary battery or a secondary battery, but particularly preferably, the solid electrolyte is used in a lithium secondary battery. Note that the term "solid-state battery" encompasses, in addition to a solid-state battery that does not contain any liquid substance or gel substance as the electrolyte, a battery that contains a liquid substance or a gel substance as the electrolyte in an amount of, for example, 50 mass% or less, 30 mass% or less, or 10 mass% or less.

The solid-state battery of the present invention has a positive electrode layer, a negative electrode layer, and a solid electrolyte layer between the positive electrode layer and the negative electrode layer, and has the solid electrolyte of the present invention. Regarding the shape of the solid-state battery of the present invention, for example, the shapes of laminate-type, cylindrical, and rectangular batteries can be used.

The solid electrolyte layer of the present invention can be produced using, for example, a method in which a slurry containing the solid electrolyte, a binder, and a solvent is dripped onto a substrate and leveled off with a doctor blade or the like; a method in which the substrate and the slurry are brought into contact with each other, followed by cutting with an air knife; a method in which a coating is formed through screen printing or the like, and then the solvent is removed through heat drying; or other methods. Alternatively, the solid electrolyte layer can also be produced by pressing a powder of the solid electrolyte of the present invention and then performing appropriate processing. The solid electrolyte layer of the present invention may also contain another solid electrolyte, in addition to the solid electrolyte of the present invention. Typically, the thickness of the solid electrolyte layer of the present invention is preferably from 5 to 300 µm, and more preferably from 10 to 100 µm.

The positive electrode mixture of the solid-state battery containing the solid electrolyte of the present invention contains a positive electrode active material. As the positive electrode active material, for example, materials that are used as positive electrode active materials for lithium secondary batteries can be used as appropriate. Examples of the positive electrode active material include a spinel-type lithium transition metal compound, a lithium metal oxide having a layered structure, and the like. The positive electrode mixture may also contain other materials, including a conductive assistant, in addition to the positive electrode active material.

The negative electrode mixture of the solid-state battery containing the solid electrolyte of the present invention contains a negative electrode active material. As the negative electrode active material, for example, negative electrode active materials that are used as negative electrode active materials for lithium secondary batteries can be used as appropriate. Examples of the negative electrode active material include lithium metals, carbon materials such as artificial graphite, natural graphite, and non-graphitizable carbon (hard carbon), silicon, silicon compounds, tin, tin compounds, and the like. The negative electrode mixture may also contain other materials, including a conductive assistant, in addition to the negative electrode active material.

### Examples

Hereinafter, the present invention will be described in greater detail by means of examples. However, the scope of the present invention is not limited to the examples below. In the following description, "%" means "mass%" unless otherwise specified.

### Example 1

A Li₂S powder, a P₂S₅ powder, a LiCl powder, and LiBr powder were weighed so that the total amount of the powders was 75 g and the composition shown in Table 1 below was realized. These powders were ground and mixed using a ball mill to obtain a powder mixture. The powder mixture was fired to obtain a fired product having the composition shown in Table 1. The firing was performed using a tubular electric furnace. During the firing, 100% pure hydrogen sulfide gas was circulated in the electric furnace at 1.0 L/min. The firing temperature was set to 500°C, and the firing was performed for 4 hours. The fired product was disintegrated using a mortar and a pestle. Subsequently, the disintegrated fired product was coarsely ground using a wet bead mill (zirconia beads having a diameter of 1 mm) with the use of toluene. The coarsely-ground fired product was finely ground using a wet bead mill (Picomill, model number: PCM-LR, manufactured by Asada Iron Works, Co., Ltd.) with the use of toluene. For the fine grinding using the wet bead mill, high-purity α-alumina beads (manufactured by Taimei Chemicals Co., Ltd., product type: TB-03, purity of Al₂O₃: 99.99% or more) having a diameter of 0.3 mm were used. The fine grinding was performed with a slurry concentration of 20% and at a peripheral speed of 6 m/s and a circulation velocity of 200 ml/min. The finely-ground fired product was subjected to solid-liquid separation, and then dried by heating to 150°C in a vessel that was evacuated to 3,000 Pa (absolute pressure), to thereby remove toluene. The dried fired product was passed through a sieve with a mesh size of 75 µm to obtain an intended solid electrolyte. The amount of toluene contained in the obtained solid electrolyte was measured using the above-described method. Table 1 below shows the result. Note that the obtained solid electrolyte was confirmed to have an argyrodite-type crystal structure.

### Examples 2 to 8 and Comparative Examples 1 to 3

Solid electrolytes were obtained by performing a similar procedure to that of Example 1, except that the drying conditions (pressure and temperature of vacuum drying) for the finely-ground fired products were changed differently. The amount of toluene contained in each of the obtained solid electrolytes was measured using the above-described method. Table 1 below shows the results. Note that the obtained solid electrolytes were confirmed to have an argyrodite-type crystal structure.

### Examples 9 and 10

A Li₂S powder, a P₂S₅ powder, and a LiCl powder were weighed so that the total amount of the powders was 75 g and the compositions shown in Table 1 below were realized. Moreover, the drying conditions (pressure and temperature of vacuum drying) for the finely-ground fired products were changed differently. Otherwise, a similar procedure to that of Example 1 was performed, and solid electrolytes were thus obtained. The amount of toluene contained in each of the obtained solid electrolytes was measured using the above-described method. Table 1 below shows the results. Note that the obtained solid electrolytes were confirmed to have an argyrodite-type crystal structure.

### Examples 11 and 12

Organic solvents shown in Table 1 below were used as the organic solvent for use in the wet grinding. Moreover, the drying conditions (pressure and temperature of vacuum drying) for the finely-ground fired products were changed differently. Otherwise, a similar procedure to that of Example 1 was performed, and solid electrolytes were thus obtained. The amount of organic solvent contained in each of the obtained solid electrolytes was measured using the above-described method. Table 1 below shows the results. Note that the obtained solid electrolytes were confirmed to have an argyrodite-type crystal structure.

### Evaluation

For each of the solid electrolytes obtained in the examples and the comparative examples, D₁₀, D₅₀, and D₉₅ were measured using the above-described methods. Moreover, the amount of hydrogen sulfide produced and the lithium ionic conductivity were measured using the following methods. Table 1 shows the results.

### Amount of Hydrogen Sulfide Produced

Within a glove box purged with a sufficiently dried Ar gas (having a dew point of -60°C or lower), 50 mg each of the sulfide solid electrolytes obtained in the examples and the comparative examples described above was weighed and put into a bag hermetically sealed with a laminated film.

A glass separable flask with a volume of 1,500 cm³ was placed in a constant temperature and humidity chamber kept at room temperature (25°C), in an atmosphere that was adjusted by mixing dry air with air and that had a dew point of -30°C, and the separable flask was kept until the environment in the separable flask became the same as the environment in the constant temperature and humidity chamber. Next, the sealed bag containing the sample was opened in the constant temperature and humidity chamber, the sample was quickly transferred into the separable flask, and then, the separable flask was hermetically sealed. To measure hydrogen sulfide that was produced during a period from immediately after sealing to 60 minutes after sealing, the hydrogen sulfide concentration was measured 60 minutes later with the use of a hydrogen sulfide sensor (GX-2009 manufactured by RIKEN KEIKI Co., Ltd.). Then, the volume of hydrogen sulfide was calculated from the hydrogen sulfide concentration after 60 minutes, to obtain the amount of hydrogen sulfide produced after 60 minutes. Table 1 shows the results. In addition, Fig. 1 shows the relationship between the amount of organic solvent contained in each solid electrolyte and the amount of hydrogen sulfide produced.

### Measurement of Lithium Ionic Conductivity

Each of the solid electrolytes obtained in the examples and the comparative examples described above was compacted through uniaxial pressing in a glovebox purged with a sufficiently dried Ar gas (having a dew point of -60°C or lower). Furthermore, the solid electrolyte was compacted at 200 MPa using a cold isostatic pressing apparatus, and thus, a pellet having a diameter of 10 mm and a thickness of about 4 to 5 mm was prepared. A carbon paste was applied to both upper and lower surfaces of the pellet to form electrodes on both surfaces. After that, the pellet was heat-treated at 180°C for 30 minutes, and thus, a sample for ionic conductivity measurement was produced. The lithium ionic conductivity of the sample was measured using a Solartron 1255B from TOYO Corporation. The measurement was performed using an AC impedance method under the conditions at a temperature of 25°C and over a frequency range of 0.1 Hz to 1 MHz.

**Table 1**

| | | Sulfide solid electrolyte | Organic solvent | | Particle size (µm) | | | Amount of hydrogen sulfide produced (cm³/g) | Lithium ionic conductivity (mS/cm) |
|---|---|---|---|---|---|---|---|---|---|
| | | | Type | Content (mass%) | D₁₀ | D₅₀ | D₉₅ | | |
| Ex. | 1 | Li_{5.4}PS_{4.4}Cl_{0.8}Br_{0.8} | Toluene | 0.48 | 0.52 | 1.34 | 6.39 | 0.40 | 5.74 |
| | 2 | | Toluene | 0.34 | 0.43 | 0.79 | 3.15 | 0.42 | 5.32 |
| | 3 | | Toluene | 0.64 | 0.42 | 0.73 | 2.12 | 0.39 | 4.69 |
| | 4 | | Toluene | 0.91 | 0.40 | 0.68 | 1.98 | 0.46 | 5.42 |
| | 5 | | Toluene | 0.79 | 0.39 | 0.66 | 1.98 | 0.36 | 4.85 |
| | 6 | | Toluene | 0.85 | 0.42 | 0.73 | 1.89 | 0.41 | 5.29 |
| | 7 | | Toluene | 0.24 | 0.96 | 2.08 | 4.49 | 0.45 | 5.25 |
| | 8 | | Toluene | 0.10 | 0.41 | 0.69 | 1.69 | 0.40 | 5.09 |
| Com. Ex. | 1 | | Toluene | 1.02 | 0.35 | 0.61 | 1.57 | 0.64 | 6.91 |
| | 2 | | Toluene | 0.99 | 0.32 | 0.55 | 1.55 | 0.61 | 7.78 |
| | 3 | | Toluene | 0.96 | 0.38 | 0.66 | 2.38 | 0.56 | 5.74 |
| Ex. | 9 | Li_{5.8}PS_{4.8}Cl_{1.2} | Toluene | 0.38 | 1.32 | 3.73 | 11.00 | 0.40 | 2.15 |
| | 10 | Li_{5.6}PS_{4.4}Cl_{1.8} | Toluene | 0.49 | 1.40 | 3.68 | 11.63 | 0.23 | 5.26 |
| | 11 | Li_{5.4}PS_{4.4}Cl_{0.8}Br_{0.8} | Heptane | 0.05 | 0.87 | 2.38 | 8.41 | 0.20 | 4.84 |
| | 12 | | Decane | 0.52 | 1.54 | 8.18 | 23.08 | 0.23 | 5.24 |

As is clear from the results shown in Table 1, it was found that the solid electrolytes obtained in the examples reduced the formation of hydrogen sulfide while maintaining high lithium ionic conductivities. By contrast, the solid electrolytes obtained in the comparative examples exhibited higher amounts of hydrogen sulfide produced than those of the examples, even though exhibiting high lithium ionic conductivities. Moreover, as is clear from the results shown in Fig. 1, it can be seen that when the amount of organic solvent contained in the solid electrolyte exceeded 0.95 mass%, the amount of hydrogen sulfide produced increased sharply.

### Industrial Applicability

According to the present invention, a sulfide solid electrolyte that reduces the formation of hydrogen sulfide is provided.

## Claims

1. A sulfide solid electrolyte having ionic conductivity and comprising an organic solvent, wherein the organic solvent is contained in an amount of 0.95 mass% or less,
a particle size of the sulfide solid electrolyte, in terms of the cumulative volume particle size D₅₀ at a cumulative volume of 50 vol% as measured through particle size distribution analysis using a laser diffraction and scattering method, is from 0.1 to 10.0 µm, and
the sulfide solid electrolyte has an argyrodite-type crystal structure.

2. The sulfide solid electrolyte according to claim 1, wherein the particle size of the sulfide solid electrolyte, in terms of the cumulative volume particle size D₁₀ at a cumulative volume of 10 vol% as measured through particle size distribution analysis using a laser diffraction and scattering method, is from 0.05 to 10.0 µm .

3. The sulfide solid electrolyte according to claim 1 or 2, wherein the particle size of the sulfide solid electrolyte, in terms of the cumulative volume particle size D₉₅ at a cumulative volume of 95 vol% as measured through particle size distribution analysis using a laser diffraction and scattering method, is from 0.3 to 35.0 µm.

4. The sulfide solid electrolyte according to any one of claims 1 to 3, wherein the particle size of the sulfide solid electrolyte, in terms of the cumulative volume particle size D₅₀ at a cumulative volume of 50 vol% as measured through particle size distribution analysis using a laser diffraction and scattering method, is from 0.3 to 10.0 µm.

5. The sulfide solid electrolyte according to claim 4, wherein the particle size of the sulfide solid electrolyte, in terms of the cumulative volume particle size D₅₀ at a cumulative volume of 50 vol% as measured through particle size distribution analysis using a laser diffraction and scattering method, is from 0.5 to 10.0 µm.

6. An electrode mixture comprising the sulfide solid electrolyte according to any one of claims 1 to 5 and an active material.

7. A solid electrolyte layer comprising the sulfide solid electrolyte according to any one of claims 1 to 5.

8. A solid-state battery comprising the sulfide solid electrolyte according to any one of claims 1 to 5.

## Patentansprüche

1. Sulfidischer Festkörperelektrolyt mit ionischer Leitfähigkeit und einem organischen Lösungsmittel, wobei das organische Lösungsmittel in einer Menge von höchstens 0,95 Masse-% enthalten ist,
wobei die Partikelgröße des sulfidischen Festkörperelektrolyten, gemessen als kumulative Volumenpartikelgröße D₅₀ bei einem kumulierten Volumen von 50 Vol.%, mittels einer Partikelgrößenverteilungsanalyse unter Verwendung eines Laserbeugungs- und Streuverfahrens im Bereich von 0,1 bis 10,0 µm liegt, und
der sulfidische Festkörperelektrolyt eine Kristallstruktur vom Argyrodit-Typ aufweist.

2. Der sulfidische Festkörperelektrolyt nach Anspruch 1, wobei die Partikelgröße des sulfidischen Festkörperelektrolyten, gemessen als kumulative Volumenpartikelgröße D₁₀ bei einem kumulierten Volumen von 10 Vol.%, mittels einer Partikelgrößenverteilungsanalyse unter Verwendung eines Laserbeugungs- und Streuverfahrens im Bereich von 0,05 bis 10,0 µm liegt.

3. Der sulfidische Festkörperelektrolyt nach Anspruch 1 oder 2, wobei die Partikelgröße des sulfidischen Festkörperelektrolyten, gemessen als kumulative Volumenpartikelgröße D₉₅ bei einem kumulierten Volumen von 95 Vol.%, mittels einer Partikelgrößenverteilungsanalyse unter Verwendung eines Laserbeugungs- und Streuverfahrens im Bereich von 0,3 bis 35,0 µm liegt.

4. Der sulfidische Festkörperelektrolyt nach einem der Ansprüche 1 bis 3, wobei die Partikelgröße des sulfidischen Festkörperelektrolyten, gemessen als kumulative Volumenpartikelgröße D₅₀ bei einem kumulierten Volumen von 50 Vol.%, mittels einer Partikelgrößenverteilungsanalyse unter Verwendung eines Laserbeugungs- und Streuverfahrens im Bereich von 0,3 bis 10,0 µm liegt.

5. Der sulfidische Festkörperelektrolyt nach Anspruch 4, wobei die Partikelgröße des sulfidischen Festkörperelektrolyten, gemessen als kumulative Volumenpartikelgröße D₅₀ bei einem kumulierten Volumen von 50 Vol.%, mittels einer Partikelgrößenverteilungsanalyse unter Verwendung eines Laserbeugungs- und Streuverfahrens im Bereich von 0,5 bis 10,0 µm liegt.

6. Elektrodenmischung, umfassend den sulfidischen Festkörperelektrolyten nach einem der Ansprüche 1 bis 5 und ein aktives Material.

7. Festkörperelektrolytschicht, umfassend den sulfidischen Festkörperelektrolyten nach einem der Ansprüche 1 bis 5.

8. Festkörperbatterie, umfassend den sulfidischen Festkörperelektrolyten nach einem der Ansprüche 1 bis 5.

## Revendications

1. Électrolyte solide sulfuré présentant une conductivité ionique et comprenant un solvant organique, ledit solvant organique étant contenu à une teneur inférieure ou égale à 0,95 % en masse,
la taille des particules de l'électrolyte solide sulfuré, en termes de taille de particule volumique cumulative D₅₀ à un volume cumulé de 50 % en volume, mesurée par analyse de distribution granulométrique utilisant une méthode de diffraction et de diffusion laser, étant comprise entre 0,1 et 10,0 µm,
et l'électrolyte solide sulfuré possédant une structure cristalline de type argyrodite.

2. L'électrolyte solide sulfuré selon la revendication 1, dans lequel la taille des particules de l'électrolyte solide sulfuré, en termes de taille de particule volumique cumulative D₁₀ à un volume cumulé de 10 % en volume, mesurée par analyse de distribution granulométrique utilisant une méthode de diffraction et de diffusion laser, est comprise entre 0,05 et 10,0 µm.

3. L'électrolyte solide sulfuré selon la revendication 1 ou 2, dans lequel la taille des particules de l'électrolyte solide sulfuré, en termes de taille de particule volumique cumulative D₉₅ à un volume cumulé de 95 % en volume, mesurée par analyse de distribution granulométrique utilisant une méthode de diffraction et de diffusion laser, est comprise entre 0,3 et 35,0 µm.

4. L'électrolyte solide sulfuré selon l'une quelconque des revendications 1 à 3, dans lequel la taille des particules de l'électrolyte solide sulfuré, en termes de taille de particule volumique cumulative D₅₀ à un volume cumulé de 50 % en volume, mesurée par analyse de distribution granulométrique utilisant une méthode de diffraction et de diffusion laser, est comprise entre 0,3 et 10,0 µm.

5. L'électrolyte solide sulfuré selon la revendication 4, dans lequel la taille des particules de l'électrolyte solide sulfuré, en termes de taille de particule volumique cumulative D₅₀ à un volume cumulé de 50 % en volume, mesurée par analyse de distribution granulométrique utilisant une méthode de diffraction et de diffusion laser, est comprise entre 0,5 et 10,0 µm.

6. Mélange d'électrode comprenant l'électrolyte solide sulfuré selon l'une quelconque des revendications 1 à 5 et un matériau actif.

7. Couche d'électrolyte solide comprenant l'électrolyte solide sulfuré selon l'une quelconque des revendications 1 à 5.

8. Batterie tout solide comprenant l'électrolyte solide sulfuré selon l'une quelconque des revendications 1 à 5.
